# EUROPEAN PATENT APPLICATION

(11) **EP 4 601 086 A1**
(43) Date of publication of application: **13.08.2025**
(21) Application number: 24188826.2
(22) Date of filing: 16.07.2024
(51) Int. Cl.: H01M 50/107, H01M 50/179, H01M 50/188, H01M 50/548, H01M 50/559, H01M 10/04, H01M 10/0587, H01M 50/588, H01M 50/593

(54) **CYLINDRICAL SECONDARY BATTERY**

(30) Priority: 08.02.2024 KR 20240019860
(71) Applicant: SAMSUNG SDI CO., LTD., Giheung-gu Yongin-si, Gyeonggi-do 17084 (KR)
(72) Inventor: Ko, Sung Gwi, 17084 Yongin-si, Gyeonggi-do, (KR); Park, Gun Gue, 17084 Yongin-si, Gyeonggi-do, (KR)
(74) Representative: Gulde & Partner

(57) **Abstract**

Disclosed is a cylindrical secondary battery (100) in which an insulating member (170) located between a rivet terminal (150) and a cylindrical can (210, 310) includes protrusions (172a, 172b, 272a, 272b, 372a, 372b) protruding therefrom upward and downward, thereby preventing rotation of the rivet terminal (150). The cylindrical secondary battery (100) may include an electrode assembly (120) including a positive electrode plate (121), a separator (123), and a negative electrode plate (122), a cylindrical can (210, 310) configured to accommodate the electrode assembly (120) and to be electrically connected to the negative electrode plate (122) and including an open lower end portion, a rivet terminal (150) configured to be electrically connected to the positive electrode plate (121) through an upper surface of the cylindrical can (210, 310), an insulating member (170) located between the cylindrical can (210, 310) and the rivet terminal (150), and a non-polar cap plate (160) configured to seal the lower end portion of the cylindrical can (210, 310). The insulating member (170) includes protrusions (172a, 172b, 272a, 272b, 372a, 372b) formed on at least one surface thereof facing the cylindrical can (210, 310) or the rivet terminal (150).

## Description

### BACKGROUND

### 1. Field

Embodiments relate to a cylindrical secondary battery.

### 2. Description of the Related Art

Generally, a cylindrical secondary battery may include a cylindrical electrode assembly including a positive electrode plate, a separator, and a negative electrode plate, a cylindrical can accommodating the electrode assembly and an electrolyte, having an open lower end portion, and electrically connected to the negative electrode plate, a rivet terminal electrically connected to the positive electrode plate through an upper surface of the cylindrical can, and a cap assembly coupled to the lower end portion of the cylindrical can to seal the can and electrically connected to the electrode assembly to act as an electrical connection element between an external device and the electrode assembly.

The information disclosed in this section is provided only for enhancement of understanding of the background of the disclosure and therefore it may contain information that does not form the related art.

### SUMMARY

Aspects of some embodiments provide a cylindrical secondary battery in which an insulating member located between a rivet terminal and a can includes protrusions protruding therefrom upward and downward, thereby preventing rotation of the rivet terminal.

A cylindrical secondary battery according to an embodiment includes an electrode assembly including a positive electrode plate, a separator, and a negative electrode plate, a cylindrical can configured to accommodate the electrode assembly and to be electrically connected to the negative electrode plate and including an open portion, a rivet terminal configured to be electrically connected to the positive electrode plate through an upper surface of the cylindrical can, an insulating member located between the cylindrical can and the rivet terminal, and a non-polar cap plate configured to seal the open portion of the cylindrical can, wherein the insulating member includes protrusions formed on at least one surface thereof facing the cylindrical can or the rivet terminal.

The insulating member may include a first terminal hole formed therein so as to allow the rivet terminal to pass therethrough.

The protrusions may be formed symmetrically with respect to the first terminal hole.

The protrusions may be formed on a lower surface and an upper surface of the insulating member facing the cylindrical can and the rivet terminal.

The protrusions may be formed on the lower surface and the upper surface of the insulating member facing the cylindrical can and the rivet terminal so as to be misaligned from each other.

The protrusions may be formed on the lower surface and the upper surface of the insulating member at a predetermined angular interval.

The protrusions may be formed asymmetrically with respect to the first terminal hole.

The protrusions may be provided in different numbers in regions symmetrical with respect to the first terminal hole.

The protrusions may have a rectangular planar shape, a circular planar shape, or a triangular planar shape.

The rivet terminal may include an outer portion exposed above the cylindrical can and an insertion portion extending from the outer portion to be located in the cylindrical can.

The outer portion may include first protrusion recesses formed in a lower surface thereof so as to allow the protrusions to be fitted thereinto.

The cylindrical can may include a second terminal hole formed in an upper surface thereof so as to allow the rivet terminal to pass therethrough.

The cylindrical can may include second protrusion recesses formed in the upper surface thereof so as to allow the protrusions to be fitted thereinto.

The second protrusion recesses may be formed symmetrically with respect to the second terminal hole.

A first gasket may be disposed between the rivet terminal and the second terminal hole.

The insulating member may be formed of at least one resin selected from among or comprising perfluoroalkoxy (PFA), polypropylene (PP), or polybutylene terephthalate (PBT).

The planar shape of the protrusions may have a V-shape bent at a predetermined angle.

The planar shape of the protrusions may have a shape of an arc of a circle concentric with the first terminal hole.

A method of manufacturing a cylindrical secondary battery according to some embodiments includes providing a cylindrical can configured to accommodate an electrode assembly and configured to be electrically connected to a negative electrode plate of the electrode assembly, wherein the cylindrical can comprises an open portion; inserting the electrode assembly through the open portion of the cylindrical can; providing a rivet terminal configured to be electrically connected to a positive electrode plate of the electrode assembly through an upper surface of the cylindrical can; providing an insulating member between the cylindrical can and the rivet terminal, wherein the insulating member comprises protrusions formed on at least one surface of the insulating member facing the cylindrical can or the rivet terminal; and coupling to the cylindrical can a cap plate configured to seal the open portion of the cylindrical can.

The method may include fitting the protrusions into first protrusion recesses formed in a lower surface of an outer portion of the rivet terminal.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The accompanying drawings, which are incorporated in this specification, illustrate exemplary embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a cross-sectional view of a cylindrical secondary battery according to an embodiment;
FIG. 2 is a perspective view showing an upper surface of a can of the cylindrical secondary battery shown in FIG. 1;
FIGs. 3A to 3C are, respectively, a side view, a top perspective view, and a bottom perspective view of an insulating member of the cylindrical secondary battery shown in FIG. 1;
FIG. 4 is a perspective view of a cylindrical secondary battery according to another embodiment;
FIGs. 5A and 5B are, respectively, a top perspective view and a bottom perspective view showing an insulating member of the cylindrical secondary battery shown in FIG. 4;
FIG. 6 is a perspective view of a cylindrical secondary battery according to another embodiment; and
FIGs. 7A and 7B are, respectively, a top perspective view and a bottom perspective view showing an insulating member of the cylindrical secondary battery shown in FIG. 6.

### DETAILED DESCRIPTION

Hereinafter, embodiments of the present disclosure will be described in detail with reference to the accompanying drawings.

Embodiments are provided to more fully illustrate the disclosure to a person having ordinary skill in the art, and the following embodiments may be modified in various other forms, and the scope of the disclosure is not limited to the following embodiments. The embodiments are provided to make the disclosure more complete and to convey the idea of the disclosure fully to those skilled in the art.

In the drawings, the thickness or size of each layer is exaggerated for convenience and clarity of description, and same reference numerals in the drawings refer to the same elements.

As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe example embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups thereof.

While terms such as "first" and "second" are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Preferred embodiments will be described in detail with reference to the accompanying drawings so that those skilled in the art to which the disclosure pertains may easily carry out the embodiments.

Throughout the specification, elements having similar configurations and operations are denoted by the same reference numerals. When one element is referred to as being electrically coupled to another element, the element may be directly coupled to the other element or indirectly coupled to the other element via one or more intervening elements.

As described herein, a cylindrical secondary battery may include a cylindrical electrode assembly including a positive electrode plate, a separator, and a negative electrode plate, a cylindrical can accommodating the electrode assembly and an electrolyte, having an open lower end portion, and electrically connected to the negative electrode plate, a rivet terminal electrically connected to the positive electrode plate through an upper surface of the cylindrical can, and a cap assembly coupled to the lower end portion of the cylindrical can to seal the can and electrically connected to the electrode assembly to act as an electrical connection element between an external device and the electrode assembly.

The rivet terminal and an insulator may be assembled with the cylindrical can through compression molding. However, there can be a problem in that the rivet terminal rotates due to low pressure.

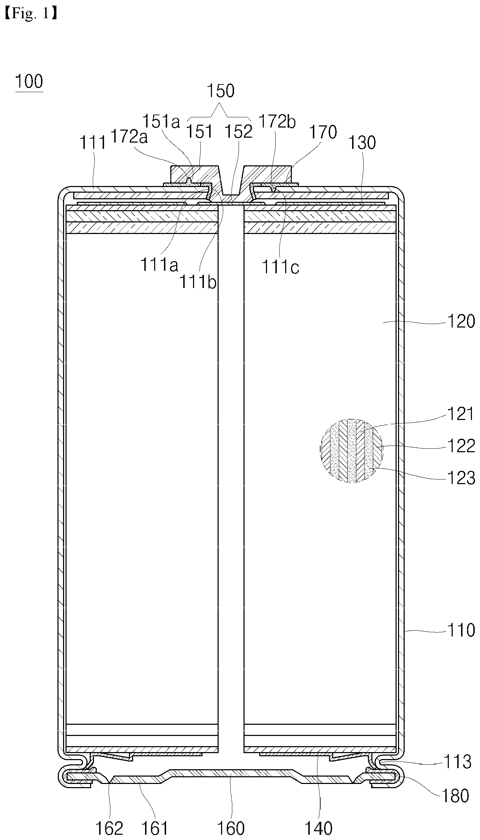

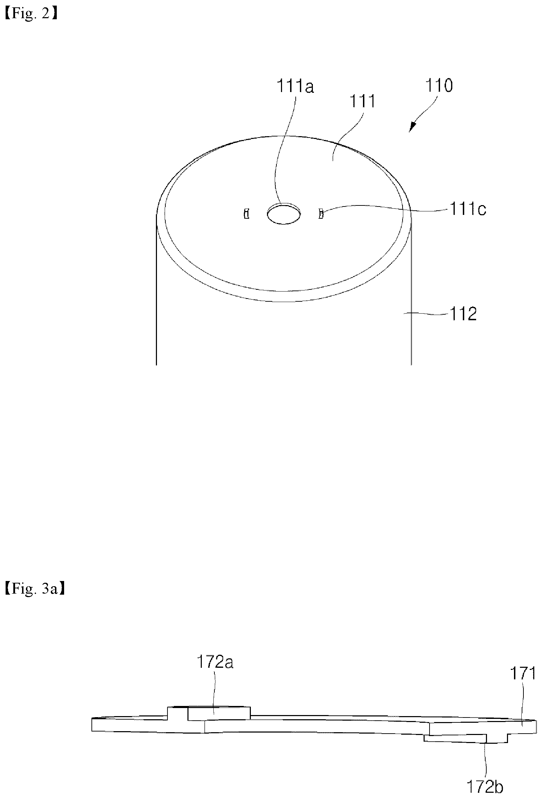

FIG. 1 is a cross-sectional view of a cylindrical secondary battery according to an embodiment. FIG. 2 is a perspective view showing an upper surface of a can of the cylindrical secondary battery shown in FIG. 1.

As shown in FIGs. 1 and 2, the cylindrical secondary battery 100 according to an embodiment may include a cylindrical can 110, an electrode assembly 120 accommodated in the cylindrical can 110, a rivet terminal 150 coupled to a second terminal hole formed in one end of the cylindrical can 110, an insulating member 170 located between the cylindrical can 110 and the rivet terminal 150, and a cap plate 160 configured to seal an opening in the other end of the cylindrical can 110.

The cylindrical can 110 may include a circular upper surface portion 111 and a side surface portion 112 extending a predetermined length downward from an edge of the upper surface portion 111. The upper surface portion 111 and the side surface portion 112 may be integrally formed with each other.

As shown in FIG. 2, the circular upper surface portion 111 may have a flat circular plate shape and may include a second terminal hole 111a formed through the central portion thereof. The rivet terminal 150 may be coupled to the upper surface portion 111 in a manner of being inserted into the second terminal hole 111a. The second terminal hole 111a may be configured to allow the rivet terminal 150 to pass therethrough. A first gasket 111b, such as for sealing and electrical insulation, may be further interposed and/or disposed between the second terminal hole 111a and the rivet terminal 150. The first gasket 111b may electrically isolate the rivet terminal 150 and the cylindrical can 110 from each other by blocking contact therebetween. The second terminal hole 111a in the upper surface portion 111 of the cylindrical can 110 may be sealed by the first gasket 111b. The first gasket 111b may be made of resin, such as polyethylene (PE), polypropylene (PP), or polyethylene terephthalate (PET). The cylindrical can 110 may include second protrusion recesses 111c formed in the upper surface thereof so as to allow protrusions (e.g., upper protrusion 172a and lower protrusion 172b) formed on the insulating member 170 to be fitted into the protrusion recesses (e.g., respectively). The second protrusion recesses 111c may be formed symmetrically with respect to the second terminal hole 111a.

During a process of manufacturing the cylindrical secondary battery 100, the lower portion of the cylindrical can 110 may be open. Therefore, during a process of manufacturing the cylindrical secondary battery 100, the electrode assembly 120 may be inserted into the cylindrical can 110 through the open lower portion of the cylindrical can 110 together with an electrolyte. In some embodiments, the electrolyte and the electrode assembly 120 may be inserted into the cylindrical can 110 with the open lower portion of the cylindrical can 110 oriented upward. After the electrolyte and the electrode assembly 120 are inserted into the cylindrical can 110, the cap plate 160 may be coupled to the open lower portion of the cylindrical can 110 to seal the interior of the cylindrical can 110. The electrolyte may serve to allow lithium ions to move between a positive electrode plate 121 and a negative electrode plate 122, which constitute the electrode assembly 120. The electrolyte may be a non-aqueous organic electrolyte that is a mixture of lithium salt and a high-purity organic solvent. In other embodiments, the electrolyte may be a polymer using a polymer electrolyte or may be a solid electrolyte. However, the type of electrolyte is not limited thereto.

The cylindrical can 110 may be formed of steel, a steel alloy, aluminum, an aluminum alloy, or an equivalent thereof. However, the material of the cylindrical can 110 is not limited thereto.

The electrode assembly 120 may include a positive electrode plate 121 coated with a positive electrode active material, a negative electrode plate 122 coated with a negative electrode active material, and a separator 123 interposed between the positive electrode plate 121 and the negative electrode plate 122 to prevent electrical short circuit between the positive electrode plate 121 and the negative electrode plate 122 while allowing lithium ions to move therebetween. After the positive electrode plate 121, the negative electrode plate 122, and the separator 123 are stacked, the electrode assembly 120 may be wound from a winding leading end to have a substantially cylindrical shape. Further, the electrode assembly 120 may include a positive electrode uncoated portion protruding upward from the positive electrode plate 121, having no positive electrode active material coated thereon, and a negative electrode uncoated portion protruding downward from the negative electrode plate 122, having no negative electrode active material coated thereon.

The positive electrode plate 121 may be configured such that a positive electrode active material, such as a transition metal oxide, is coated on at least one surface of the positive electrode plate, which may be a plate-shaped metal foil made of aluminum (Al). The positive electrode plate 121 may be provided with a positive electrode uncoated portion at the upper end portion thereof, on which the positive electrode active material is not coated. The positive electrode uncoated portion may protrude upward from the electrode assembly 120. For example, the positive electrode uncoated portion of the positive electrode plate 121 may protrude upward further than the negative electrode plate 122 and the separator 123.

The negative electrode plate 122 may be configured such that a negative electrode active material, such as graphite or carbon, is coated on at least one surface of a negative electrode plate, which may be a plate-shaped metal foil made of copper (Cu) or nickel (Ni). The negative electrode plate 122 may be provided with a negative electrode uncoated portion at the lower end portion thereof, on which the negative electrode active material is not coated. The negative electrode uncoated portion may protrude downward from the electrode assembly 120. The negative electrode uncoated portion of the negative electrode plate 122 may protrude downward further than the positive electrode plate 121 and the separator 123.

The separator 123 may be made of polyethylene (PE) or polypropylene (PP), however, the embodiments are not limited thereto. The separator 123 may prevent electrical short circuit between the positive electrode plate 121 and the negative electrode plate 122 while allowing lithium ions to move therebetween.

A positive electrode current collector 130 may be a circular metal plate shaped corresponding to the upper surface of the electrode assembly 120. The planar size of the positive electrode current collector 130 may be equal to or smaller than the size of the upper surface of the electrode assembly 120. The positive electrode current collector 130 may be made of aluminum (Al). The positive electrode current collector 130 may be fixed and electrically connected to the positive electrode plate 121, which may be exposed at an upper portion of the electrode assembly 120, through welding such that the lower surface of the positive electrode current collector 130 is in contact with the upper surface of the electrode assembly 120. The positive electrode current collector 130 may be fixed and electrically connected to the rivet terminal 150 through welding such that the upper surface of the positive electrode current collector 130 is in contact with the lower surface of the rivet terminal 150. The positive electrode current collector 130 may act as a passage for flow of current between the positive electrode plate 121 of the electrode assembly 120 and the rivet terminal 150.

A negative electrode current collector 140 may include a circular flat portion corresponding to the lower surface of the electrode assembly 120 and an extension portion extending downward from the edge of the flat portion. The upper surface of the flat portion may be in contact with the lower surface of the electrode assembly 120. The flat portion may be fixed and electrically connected to the negative electrode plate 122, which may be exposed at a lower portion of the electrode assembly 120, through welding such that the upper surface of the flat portion is in contact with the lower surface of the electrode assembly 120. The extension portion may be bent and may extend downward from the edge of the flat portion. A beading portion 113 may be formed on the lower surface portion of the can 110, and the negative electrode current collector 140 may be seated beneath the beading portion 113. The negative electrode current collector 140 may be in contact with the inner surface of the beading portion 113, and an end portion thereof may be located beneath the beading portion 113. The negative electrode current collector 140 may be welded so as to be in contact with the lower inner surface of the beading portion 113 to be fixed and electrically connected to the cylindrical can 110. In some embodiments, welding between the extension portion and the beading portion 113 may be performed in a direction from the extension portion toward the beading portion 113 in a state in which the negative electrode current collector 140 is seated beneath the beading portion 113 before a crimping portion of the cylindrical can 110 is formed. Therefore, the negative electrode current collector 140 may act as a passage for flow of current between the negative electrode plate 122 of the electrode assembly 120 and the cylindrical can 110.

The rivet terminal 150 may be inserted into the second terminal hole 111a formed in the upper surface portion 111 of the cylindrical can 110 and may be electrically connected to the positive electrode current collector 130. The rivet terminal 150 may be made of a material identical or similar to that of the positive electrode current collector 130 or the positive electrode plate 121, such as including but not limited to aluminum (Al). The rivet terminal 150 may include an outer portion 151 exposed above the cylindrical can 110 and an insertion portion 152 extending from the outer portion 151 to being located in (e.g., within) the cylindrical can 110. The rivet terminal 150 may be coupled to the second terminal hole 111a in the upper surface portion 111 of the cylindrical can 110 from the bottom to the top, and then the outer portion 151 of the rivet terminal 150 may be compression-deformed (e.g., compression-molded) through a processing method such as pressing or spinning, and thus, may come into close contact with the upper surface portion 111 of the cylindrical can 110. In other embodiments, after the rivet terminal 150 is inserted into the second terminal hole 111a from the inside of the can 110, the outer portion 151 thereof protruding outward may be deformed to have a larger diameter than the second terminal hole 111a, and thus, may be supported and fixed by the outer surface of the upper surface portion 111 of the can 110. A first protrusion recess 151a, into which a protrusion formed on the insulating member 170 may be fitted, may be formed in the lower surface of the outer portion 151. In some embodiments, a plurality of first protrusion recesses may be included. The first gasket 111b may be interposed and/or disposed between the rivet terminal 150 and the second terminal hole 111a to perform electrical insulation and sealing between the rivet terminal 150 and the cylindrical can 110, in some embodiments. The rivet terminal 150 may be electrically connected to the positive electrode plate 121 of the electrode assembly 120 via the positive electrode current collector 130.

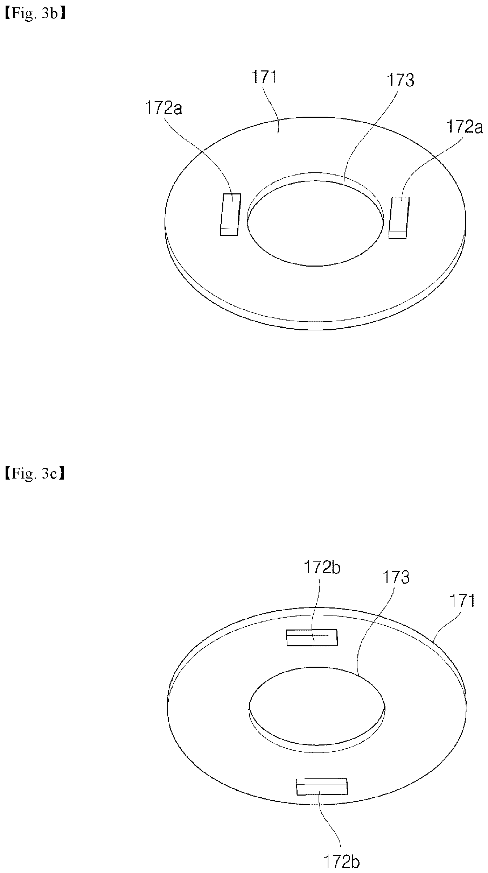

FIG. 3A illustrates a side view of the insulating member of the cylindrical secondary battery shown in FIG. 1. FIG. 3B illustrates a top perspective view of the insulating member of the cylindrical secondary battery shown in FIG. 1. FIG. 3C illustrates a bottom perspective view of the insulating member of the cylindrical secondary battery shown in FIG. 1.

As shown in FIGs. 3A to 3C, the insulating member 170 may include a circular plate member 171 located between the cylindrical can 110 and the rivet terminal 150, a first terminal hole 173 formed in the central region of the plate member 171, and protrusions 172a and 172b formed on at least one surface of the plate member 171 that faces the cylindrical can 110 or the rivet terminal 150. The protrusions may be formed both on the lower surface and on the upper surface of the insulating member 170 that face the cylindrical can 110 and the rivet terminal 150. For example, the insulating member 170 may include the upper protrusion 172a and the lower protrusion 172b formed on the upper surface and the lower surface thereof, respectively, thereby fixing the rivet terminal 150 and the cylindrical can 110 coupled to the upper surface and the lower surface thereof. The upper protrusion 172a and the lower protrusion 172b may be formed on the upper surface and the lower surface of the insulating member 170, which face the rivet terminal 150 and the cylindrical can 110, and may be formed so as to be misaligned or offset from each other. In some embodiments, the upper protrusion 172a and the lower protrusion 172b may be disposed at a predetermined angular interval. Therefore, rotation of the rivet terminal 150 inserted into the cylindrical can 110 may be prevented, and thus, airtightness between parts and sealability of the interior of the cell may be improved. Further, separation between the positive electrode current collector 130 and the rivet terminal 150 welded thereto may be prevented.

The insulating member 170 may include a first terminal hole 173 through which the rivet terminal 150 passes. The upper protrusion 172a and the lower protrusion 172b may be formed symmetrically with respect to the first terminal hole 173, however, the embodiments are not limited thereto. In some embodiments, the protrusions 172a and 172b may be formed asymmetrically with respect to the first terminal hole 173. In other embodiments, the protrusions 172a and 172b may be provided in different numbers in regions that are symmetrical with respect to the first terminal hole 173. The protrusions (e.g., upper protrusion 172a and lower protrusion 172b) may have a rectangular planar shape, a circular planar shape, or a triangular planar shape.

The insulating member 170 may be formed of at least one resin selected from among perfluoroalkoxy (PFA), polypropylene (PP), and polybutylene terephthalate (PBT).

Referring to FIG. 1, the cap plate 160 may be a circular metal plate and may be coupled to the lower end portion of the cylindrical can 110. The cap plate 160 may be coupled to the lower end portion of the cylindrical can 110 with a second gasket 180 interposed therebetween, and thus, may be prevented from being electrically connected to the cylindrical can 110. In some embodiments, because the cap plate 160 is not electrically connected to the positive electrode or the negative electrode of the electrode assembly 120, the cap plate 160 may be an electrically non-polar part.

The cap plate 160 may be fixed by forming a crimping portion at the lower end of the cylindrical can 110 such that the edge of the cap plate 160 is seated beneath the lower flat portion of the beading portion 113 of the cylindrical can 110. The cap plate 160 may be seated on the beading portion 113 in a state in which the open lower portion of the cylindrical can 110 faces upward.

The cap plate 160 may include at least one protruding portion 161 protruding downward. For example, the protruding portion 161 of the cap plate 160 may be spaced apart from the central portion thereof and may protrude downward so as to have a ring shape when viewed in plan. In another example, the protruding portion 161 of the cap plate 160 may protrude downward so as to have multiple patterns. The protruding portion 161 of the cap plate 160 may serve to support internal pressure in the cylindrical can 110. The lower surface of the protruding portion 161 of the cap plate 160 may be located at a higher position than the lower surface of the crimping portion of the cylindrical can 110. For example, the crimping portion of the cylindrical can 110 may protrude downward farther than the protruding portion 161 of the cap plate 160. Therefore, if the cylindrical secondary battery 100 is placed on a certain flat surface, the crimping portion of the cylindrical can 110 may contact the certain surface, and the protruding portion 161 of the cap plate 160 may be spaced apart from the certain surface. Because the crimping portion of the cylindrical can 110 protrudes downward farther than the protruding portion 161 of the cap plate 160, it may be possible to prevent the cap plate 160 from contacting the certain surface even when the cap plate 160 expands due to the internal pressure in the cylindrical can 110. Therefore, in some embodiments, even when the internal pressure in the cylindrical can 110 increases, the overall height of the cylindrical secondary battery 100 may be maintained.

The cap plate 160 may include a notch 162 formed therein in order to be opened at a predetermined pressure. If the internal pressure in the cylindrical can 110 reaches a rupture pressure or higher, the notch 162 may rupture, thereby preventing the cylindrical secondary battery 100 from exploding. For example, if excessive internal pressure occurs in the cylindrical can 110, the notch 162 may rupture, thereby discharging the excessive internal pressure. The notch 162 in the cap plate 160 may be spaced apart from the central portion of the cap plate 160 and may be formed to have a ring shape when viewed in plan. In another example, the notch 162 may be formed to have multiple patterns. The embodiments are not limited to a specific shape of the notch 162.

The notch 162 may be formed so as to be spaced apart from the protruding portion 161. In some embodiments, the notch 162 may be formed in a concave portion of the cap plate 160, which is concave toward the cylindrical can 110 with respect to the protruding portion 161, rather than in the protruding portion 161 of the cap plate 160. Because, in some embodiments, the cap plate 160 has a concave-convex structure due to the concave portion and the protruding portion 161, the cap plate 160 may withstand the internal pressure in the cylindrical can 110 even when the internal pressure increases.

The second gasket 180 may be formed of resin such as polyethylene (PE), polypropylene (PP), or polyethylene terephthalate (PET). The second gasket 180 may perform pressing and sealing between the cylindrical can 110 and the cap plate 160 and may prevent the cap plate 160 from being separated from the cylindrical can 110.

Although the cylindrical secondary battery has been described above as being structured such that the positive electrode (e.g., the positive electrode plate) is disposed on the upper surface thereof and the negative electrode (e.g., the negative electrode plate) is disposed on the lower surface thereof, the embodiments are not limited thereto. For example, the cylindrical secondary battery may be structured such that both the negative electrode and the positive electrode are disposed on the upper surface thereof. In embodiments in which both the negative electrode and the positive electrode are disposed on the upper surface of the cylindrical secondary battery 100, if plural cylindrical secondary batteries are electrically connected to each other via busbars, connection using the busbars may be performed only on the upper surfaces of the cylindrical secondary batteries, thus simplifying the busbar connection structure.

Hereinafter, another example of the insulating member in a cylindrical secondary battery according to another embodiment will be described. The cylindrical secondary battery may include elements as described in relation to FIG. 1.

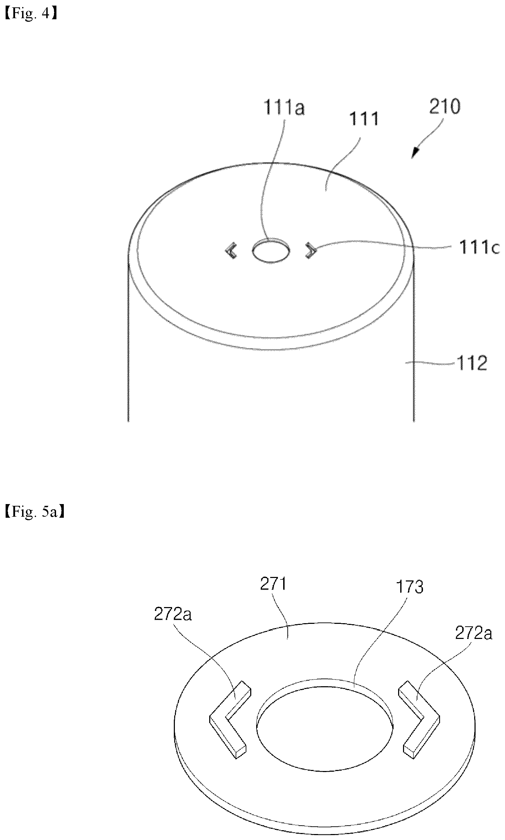

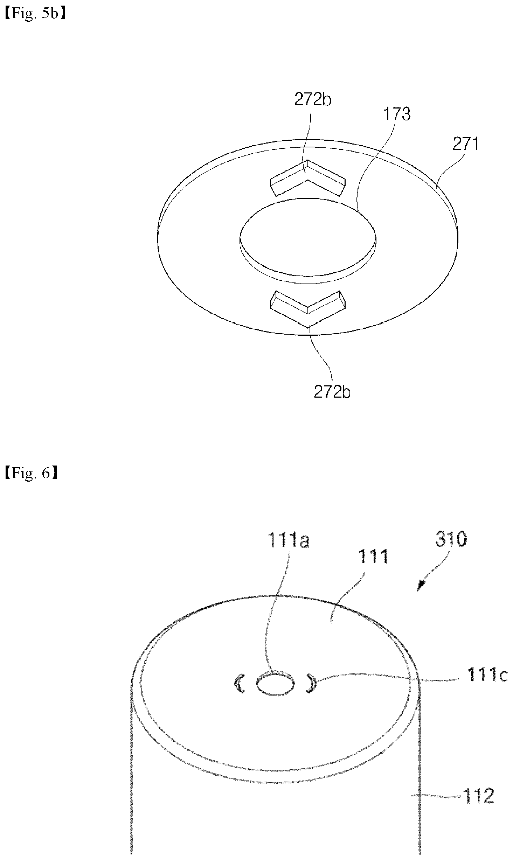

FIG. 4 is a perspective view of a cylindrical secondary battery according to another embodiment. FIG. 5A illustrates a top perspective view showing an insulating member of the cylindrical secondary battery shown in FIG. 4. FIG. 5B illustrates a bottom perspective view showing the insulating member of the cylindrical secondary battery shown in FIG. 4.

Referring to FIGs. 5A and 5B together with FIG. 4, the insulating member may be located between the cylindrical can 210 and the rivet terminal 150 (e.g., as described in relation to FIG. 1) and may include a circular plate member 271, a first terminal hole 173 (e.g., as described in relation to FIG. 3B) formed in the central region of the plate member 271, and protrusions 272a and 272b formed on at least one surface of the plate member 271 that faces the cylindrical can 210 or the rivet terminal 150.

The protrusions 272a and 272b may be formed both on the upper surface and on the lower surface of the insulating member that face the rivet terminal 150 and the cylindrical can 210. The upper protrusion 272a and the lower protrusion 272b may be formed on the upper surface and the lower surface of the insulating member, which face the rivet terminal 150 and the cylindrical can 210, and may be formed so as to be misaligned or offset from each other. In some embodiments, the upper protrusion 272a and the lower protrusion 272b may be disposed at a predetermined angular interval.

Each of the upper protrusion 272a and the lower protrusion 272b may be provided in a pair symmetrically with respect to the first terminal hole 173. The pair of upper protrusions 272a may be formed on the left and right of the first terminal hole 173 and may have a V-shape (e.g., the planar shape may have a V-shape). The V-shape of the upper protrusions 272a may be a shape that is bent at a predetermined angle in the middle. Similar to the pair of upper protrusions 272a, the pair of lower protrusions 272b may also have a V-shape and may be located so as to be misaligned or offset from the pair of upper protrusions 272a.

Due to the above-described shape thereof, the upper protrusion 272a and the lower protrusion 272b may increase areas of contact with the rivet terminal 150 and the cylindrical can 210. Therefore, if rotational force is applied to the rivet terminal 150, the upper protrusion 272a and the lower protrusion 272b may effectively prevent rotation of the rivet terminal 150, thereby improving airtightness between parts and sealability of the interior of the cell.

Hereinafter, another example of the insulating member in a cylindrical secondary battery according to another embodiment will be described. The cylindrical secondary battery may include elements as described in relation to FIG. 1.

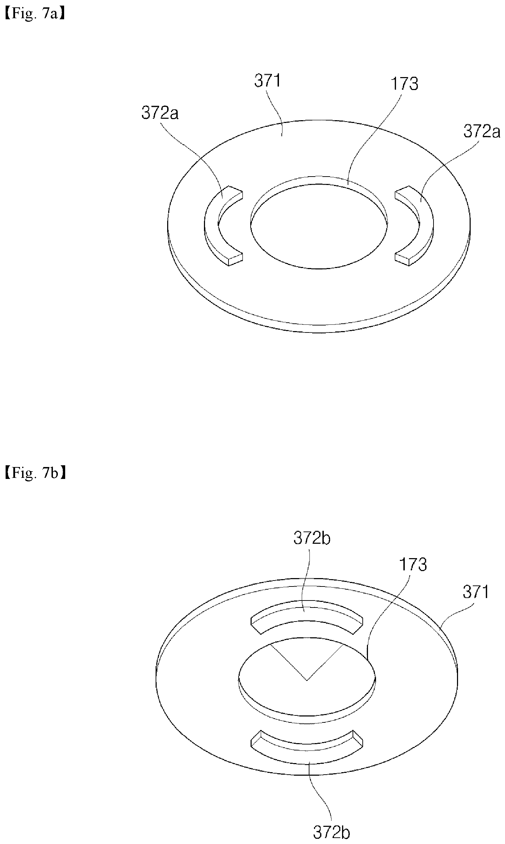

FIG. 6 is a perspective view of a cylindrical secondary battery according to another embodiment. FIG. 7A illustrates a top perspective view showing an insulating member of the cylindrical secondary battery shown in FIG. 6. FIG. 7B illustrates a bottom perspective view showing an insulating member of the cylindrical secondary battery shown in FIG. 6.

Referring to FIGs. 7A and 7B together with FIG. 6, the insulating member may be located between the cylindrical can 310 and the rivet terminal 150 (e.g., as described in relation to FIG. 1) and may include a circular plate member 371, a first terminal hole 173 (e.g., as described in relation to FIG. 3B) formed in the central region of the plate member 371, and protrusions 372a and 372b formed on at least one surface of the plate member 371 that faces the cylindrical can 310 or the rivet terminal 150. The upper protrusion 372a and the lower protrusion 372b may be formed on the upper surface and the lower surface of the insulating member, which face the rivet terminal 150 and the cylindrical can 310, so as to be misaligned or offset from each other.

The upper protrusion 372a may be formed on each of the left and right of the first terminal hole 173 and may have an arc shape (e.g., the planar shape may have a shape of an arc). For example, the arc shape of the upper protrusions 372a may be a partial arc of a circle concentric with the circular first terminal hole 173. Therefore, the upper protrusions 372a may also be formed in the shape of a circle concentric with the first terminal hole 173. Similar to the upper protrusions 372a, the lower protrusions 372b may also be formed in the shape of a partial arc of a circle concentric with the circular first terminal hole 173 and may be located so as to be misaligned from the upper protrusions 372a.

Due to the above-described shape of the protrusions, the upper protrusion 372a and the lower protrusion 372b may increase areas of contact with the rivet terminal 150 and the cylindrical can 310 in a rotational direction. Therefore, if rotational force is applied to the rivet terminal 150, the upper protrusion 372a and the lower protrusion 372b may effectively prevent rotation of the rivet terminal 150, thereby improving airtightness between parts and sealability of the interior of the cell.

As is apparent from the above description, in a cylindrical secondary battery according to the embodiments, an insulating member located between a rivet terminal and a can may include protrusions protruding therefrom upward and downward, thereby preventing rotation of the rivet terminal.

According to the embodiments, because the rivet terminal may be fixed so as not to be rotated, airtightness between parts and sealability of the interior of a cell may be improved.

According to some embodiments, there is provided a method of manufacturing a cylindrical secondary battery, the method including: providing a cylindrical can configured to accommodate an electrode assembly and configured to be electrically connected to a negative electrode plate of the electrode assembly, wherein the cylindrical can comprises an open portion; inserting the electrode assembly through the open portion of the cylindrical can; providing a rivet terminal configured to be electrically connected to a positive electrode plate of the electrode assembly through an upper surface of the cylindrical can; providing an insulating member between the cylindrical can and the rivet terminal, wherein the insulating member comprises protrusions formed on at least one surface of the insulating member facing the cylindrical can or the rivet terminal; and coupling to the cylindrical can a cap plate configured to seal the open portion of the cylindrical can.

According to some embodiments, the method may include fitting the protrusions into first protrusion recesses formed in a lower surface of an outer portion of the rivet terminal.

The above-mentioned embodiments are example embodiments for implementing an exemplary cylindrical secondary battery according to the disclosure; therefore, the disclosure is not limited to the above-mentioned embodiments, and it is to be understood by those skilled in the art that various modifications can be made without departing from the scope of the disclosure as claimed in the appended claims and equivalents thereto.

## Claims

1. A cylindrical secondary battery (100) comprising:
an electrode assembly (120) comprising:
a positive electrode plate (121),
a separator (123), and
a negative electrode plate (122);
a cylindrical can (210, 310) configured to accommodate the electrode assembly (120) and to be electrically connected to the negative electrode plate (122), wherein the cylindrical can (210, 310) comprises an open portion;
a rivet terminal (150) configured to be electrically connected to the positive electrode plate (121) through an upper surface of the cylindrical can (210, 310);
an insulating member (170) located between the cylindrical can (210, 310) and the rivet terminal (150); and
a cap plate (160) configured to seal the open portion of the cylindrical can (210, 310),
wherein the insulating member (170) comprises protrusions (172a, 172b, 272a, 272b, 372a, 372b) formed on at least one surface of the insulating member (170) facing the cylindrical can (210, 310) or the rivet terminal (150).

2. The cylindrical secondary battery (100) as claimed in claim 1, wherein the insulating member (170) comprises a first terminal hole (173) formed therein and configured to allow the rivet terminal (150) to pass therethrough.

3. The cylindrical secondary battery (100) as claimed in claim 2, wherein the protrusions (172a, 172b, 272a, 272b, 372a, 372b) are formed symmetrically or asymmetrically with respect to the first terminal hole (173).

4. The cylindrical secondary battery (100) as claimed in claim 2 or 3,
wherein the protrusions (172a, 172b, 272a, 272b, 372a, 372b) are formed on a lower surface and an upper surface of the insulating member (170) facing the cylindrical can (210, 310) and the rivet terminal (150); or
wherein the protrusions (172a, 172b, 272a, 272b, 372a, 372b) are formed on a lower surface and an upper surface of the insulating member (170) facing the cylindrical can (210, 310) and the rivet terminal (150) so as to be misaligned from each other.

5. The cylindrical secondary battery (100) as claimed in any one of claims 2 to 4, wherein the protrusions (172a, 172b, 272a, 272b, 372a, 372b) are formed on a lower surface and an upper surface of the insulating member (170) at a predetermined angular interval.

6. The cylindrical secondary battery (100) as claimed in any one of claims 2 to 5, wherein the protrusions (172a, 172b, 272a, 272b, 372a, 372b) are provided in different numbers in regions symmetrical with respect to the first terminal hole (173).

7. The cylindrical secondary battery (100) as claimed in any one of claims 2 to 6,
wherein a planar shape of the protrusions (172a, 172b, 272a, 272b, 372a, 372b) has a shape of an arc of a circle concentric with the first terminal hole (173); and/or
wherein a planar shape of the protrusions (172a, 172b, 272a, 272b, 372a, 372b) has a V-shape bent at a predetermined angle.

8. The cylindrical secondary battery (100) as claimed in any one of the preceding claims, wherein the protrusions (172a, 172b, 272a, 272b, 372a, 372b) have a rectangular planar shape, a circular planar shape, or a triangular planar shape.

9. The cylindrical secondary battery (100) as claimed in any one of the preceding claims, wherein the rivet terminal (150) comprises:
an outer portion (151) exposed above the cylindrical can (210, 310); and
an insertion portion (152) extending from the outer portion (151) within the cylindrical can (210, 310).

10. The cylindrical secondary battery (100) as claimed in claim 9, wherein the outer portion (151) comprises first protrusion recesses formed in a lower surface of the out portion (151) and configured to allow the protrusions (172a, 172b, 272a, 272b, 372a, 372b) to be fitted into the first protrusion recesses, respectively.

11. The cylindrical secondary battery (100) as claimed in any one of the preceding claims, wherein the cylindrical can (210, 310) comprises a second terminal hole (111a) formed in an upper surface of the cylindrical can (210, 310) configured to allow the rivet terminal (150) to pass therethrough.

12. The cylindrical secondary battery (100) as claimed in claim 11, wherein the cylindrical can (210, 310) comprises second protrusion recesses (111c) formed in the upper surface of the cylindrical can (210, 310) configured to allow the protrusions (172a, 172b, 272a, 272b, 372a, 372b) to be fitted into the second protrusion recesses (111c), respectively.

13. The cylindrical secondary battery (100) as claimed in claim 12, wherein the second protrusion recesses (111c) are formed symmetrically with respect to the second terminal hole (111a).

14. The cylindrical secondary battery (100) as claimed in any one of claims 11 to 13, comprising a first gasket (111b) disposed between the rivet terminal (150) and the second terminal hole (111a).

15. The cylindrical secondary battery (100) as claimed in any one of the preceding claims, wherein the insulating member (170) is formed of at least one resin comprising perfluoroalkoxy, PFA, polypropylene, PP, or polybutylene terephthalate, PBT.
